# FASCICULE DE BREVET EUROPEEN

(11) **EP 1 234 117 B1**
(45) Date de publication et mention de la délivrance du brevet: **14.05.2003**
(21) Numéro de dépôt: 00971506.1
(22) Date de dépôt: 25.10.2000
(51) Int. Cl.: F15B 15/19, F15B 15/22

(54) **MECANISME ANTI-CHOC, NOTAMMENT POUR APPLICATION SPATIALE**
MECHANISMUS ZUR STOSSDÄMPFUNG, INSBESONDERE ZUR VERWENDUNG IM WELTRAUM
SHOCKPROOF MECHANISM, IN PARTICULAR FOR USE IN SPACE SECTOR

(30) Priorité: 30.11.1999 FR 9915178
(43) Date de publication de la demande: 28.08.2002
(73) Titulaire: ETIENNE LACROIX - TOUS ARTIFICES SA, 31600 Muret (FR)
(72) Inventeur: VALEMBOIS, Guy, F-31700 Blagnac (FR); MEDUS, Dominique, F-31240 l'Union (FR); BARICOS, Jean, F-31520 Ramonville-Saint-Agne (FR)
(74) Mandataire: Texier, Christian
(86) Numéro de dépôt international: FR0002976
(87) Numéro de publication internationale: WO01040664

(56) Documents cités:
- FR-A- 2 534 642
- GB-A- 2 004 984
- US-A- 2 857 890

## Description

La présente invention concerne le domaine des mécanismes actionnés par un effet thermique.

La présente invention trouve notamment, mais non exclusivement, application dans le domaine de l'industrie spatiale, par exemple sur les lanceurs ou les satellites, notamment sous forme de cisaille, vanne, coupe sangle, etc ...

Les moyens actionnés par un effet thermique connus, notamment les moyens pyrotechniques connus, offrent de grandes possibilités. Ils présentent en particulier un fort potentiel entre énergie fournie et masse embarquée, ainsi qu'une grande fiabilité.

Cependant, ces mécanismes présentent également un inconvénient majeur : la grande dynamique induite par leur fonctionnement.

En effet, les niveaux de chocs et de vibrations sont souvent rédhibitoires à l'utilisation d'équipements fragiles à leur proximité.

Du document EP-A-0 311 026 est connu, par ailleurs, un mécanisme cmnportant un moyen de chauffage permettant de générer une fonction amortisseur de choc. La régulation du moyen de chauffage électrique est cependant coûteuse à mettre en oeuvre.

La présente invention a pour but de proposer un nouveau mécanisme qui ne présente pas les inconvénients précités.

Ce but est atteint dans le cadre de la présente invention, grâce à un équipement conforme à la revendication 1 annexée, laquelle est délimitée sous forme d'un préambule et d'une partie caractérisante par rapport à EP-A-0 311 026.

D'autres caractéristiques, buts et avantages de la présente invention apparaîtront à la lecture de la description détaillée qui va suivre et en regard des dessins annexés, donnés à titre d'exemples non limitatifs et sur lesquels :
- la figure 1 représente schématiquement une structure conforme à la présente invention, sous forme d'un actionneur linéaire vue en coupe axiale partielle longitudinale, et
- les figures 2 à 5 représentent quatre variantes de réalisation de mécanismes conformes à la présente invention.

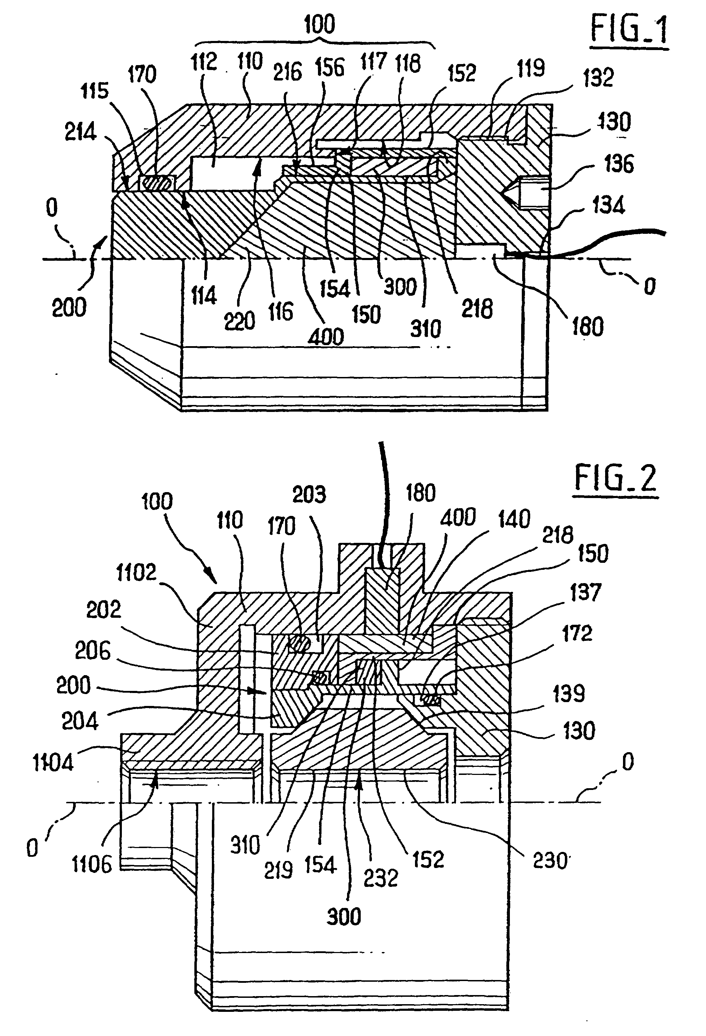

On va tout d'abord décrire la structure de l'actionneur linéaire illustré sur la figure 1 annexée.

Le système illustré sur la figure 1 annexée comprend essentiellement une structure constituée de deux ensembles 100, 200 susceptibles de déplacement relatif, un bloc 300 de métal à bas point de fusion et une composition pyrotechnique 400 fortement exothermique.

Dans le cas d'espèce, les deux ensembles 100, 200 sont susceptibles de translation relative selon l'axe central O-O de la structure.

Le premier ensemble 100 est composé de trois pièces : un corps 110, un bouchon 130 et une bague 150.

Le corps 110 est généralement cylindrique de révolution autour de l'axe O-O. Plus précisément, le corps 110 possède un canal interne central 112 étagé. Le canal 112 est divisé, selon la figure 1, en trois sections 114, 116, 118, juxtaposées axialement.

La section 118 présentant le diamètre interne le plus important, adjacente à une première extrémité de l'ensemble 100 est munie d'un taraudage 119 sur une partie de sa longueur. Le taraudage 119 est complémentaire d'un filetage 132 prévu sur le bouchon 130.

La section 114 présentant le plus petit diamètre inteme est adjacente à la seconde extrémité, opposée, de l'ensemble 100. Cette petite section 114 est munie, sur sa surface interne, d'une gorge annulaire 115 conçue pour recevoir un joint torique d'étanchéité 170 destiné à assurer l'étanchéité entre les deux ensembles 100, 200.

La section 116 présentant le diamètre interne intermédiaire entre les deux sections 114, 118 précitées est située axialement entre ces deux sections précitées.

Le bouchon 130 a la forme générale d'un disque s'étendant perpendiculairement à l'axe O-O. Comme indiqué précédemment, le bouchon 130 possède un filetage 132 complémentaire du taraudage 119. Ainsi, le bouchon 130 peut être vissé sur la première extrémité du corps 110 pour obturer celle-ci. Le bouchon 130 possède un canal axial traversant 134, par exemple central. Ce canal 134 est destiné à recevoir un initiateur 180, pour la composition pyrotechnique 400, par exemple un initiateur électrique.

Le bouchon 130 est de préférence muni de structures, par exemple une série de perçages excentrés 136, destinés à faciliter l'entraînement à rotation du bouchon 130 pour assurer sa fixation sur le corps 110.

Il est défini au niveau de la zone de liaison entre la section 118 de plus grande dimension et la section intermédiaire 116, un décrochement 117 sous forme d'une couronne annulaire transversale à l'axe O-O, dirigé vers la première extrémité de l'ensemble 100.

Selon le mode de réalisation illustré sur la figure 1, le second ensemble 200 est constitué d'un piston centré sur l'axe O-O. Celui-ci est étagé sur sa surface externe.

Plus précisément encore, selon le mode de réalisation illustré sur la figure 1, le piston 200 est étagé sous forme de trois sections : 214, 216, 218.

La section 214 de plus petit diamètre est située au niveau de la seconde extrémité du corps 110. Son diamètre externe est complémentaire du diamètre interne de la section 114 du corps 110. Le joint annulaire 170 précité prend appui sur cette surface externe pour assurer l'étanchéité entre les deux ensembles 100 et 200.

La section 218 de plus grand diamètre du piston 200 est située au voisinage de la première extrémité du corps 110. Le diamètre externe de cette section 218 est compris entre le diamètre interne de la section 116 et le diamètre interne de la section 118 du corps 110.

La section 216 du piston 200 est située axialement entre les deux sections précitées 214, 218. Elle possède un diamètre externe compris entre celui des sections 114 et 116 du corps 110.

La bague 150 est formée de deux tronçons cylindriques 152, 156 centrés autour de l'axe O-O reliés par un anneau central 154 transversal à l'axe O-O.

Le tronçon cylindrique 152 possède un diamètre externe compris entre le diamètre interne de la section 118 du corps et le diamètre interne de la section intermédiaire 116 du corps 110. Le diamètre interne de ce tronçon cylindrique 152 est complémentaire du diamètre externe de la grande section 218 du piston et repose contre cette grande section. Ce tronçon cylindrique 152 est situé entre le décrochement 117 et la face axiale interne du bouchon 130. La longueur axiale du tronçon cylindrique 152 est telle que celui-ci est immobilisé, pincé entre les deux éléments précités, lorsque le bouchon 130 est assemblé sur le corps 110.

Le second tronçon 156 de la bague 150 possède un diamètre externe inférieur au diamètre interne de la section 116 et un diamètre interne complémentaire du diamètre externe de la section 216 du piston 200. II repose sur ce dernier.

L'extension radiale de l'anneau intermédiaire 154 sur l'intérieur du tronçon cylindrique 152 est égale à l'extension radiale du tronçon 218 du piston sur l'extérieur de la section 216.

Ainsi, la bague 150 définit en combinaison avec le piston 200 une chambre 310 logeant un volume de métal à bas point de fusion 300.

Cette chambre 310 est délimitée radialement sur l'extérieur par le tronçon cylindrique 152 de la bague 150, radialement sur l'intérieur par la paroi du piston constituant la section intermédiaire 216, axialement côté première extrémité par la grande section 218 du piston et axialement côté seconde extrémité par l'anneau intermédiaire 154 de la bague 150.

Le piston 200 est par ailleurs muni d'une chambre borgne centrale 220 qui débouche sur la première extrémité du piston, en regard de l'initiateur électrique 180 et qui loge la composition pyrotechnique 400.

Le fonctionnement du pyromécanisme illustré sur la figure 1 est pour l'essentiel le suivant : avant mise en oeuvre de l'initiateur électrique 180, et initiation de la composition pyrotechnique 400, la brasure constituée par le métal à bas point de fusion 300 situé au niveau des interfaces entre les pièces 156 et 216 et entre les pièces 152 et 218, ainsi que la phase solide de ce métal 300 situé dans la chambre 310 assurent un blocage sûre et efficace de la structure en assurant une immobilisation relative entre les deux ensembles 100 et 200, la bague 150 étant immobilisée par rapport au corps 110 et au bouchon 130. On notera que dans cette position, la petite section 214 du piston 200 peut émerger au moins partiellement sur l'extérieur de l'ensemble 100.

L'alimentation de l'initiateur électrique 180 permet le déclenchement de la composition pyrotechnique 400 et de là une élévation rapide de la température du métal 300 propre à assurer sa fusion afin de libérer le piston 200 par rapport à l'ensemble 100. Les gaz issus de la réaction chimique au niveau de la composition pyrotechnique 400 provoquent une expansion de la chambre 220 et donc un déplacement du piston 200 en éloignement du bouchon 130 par translation selon l'axe O-O. Ce déplacement du piston 200 entraîne une réduction du volume de la chambre 310, donc un transfert du métal à bas point de fusion 300, par laminage entre les surfaces adjacentes de la bague 150 et du piston 200, pour générer une fonction d'amortisseur de mouvement.

La solidification du métal à bas point de fusion 300 permet ensuite, après reconstitution de la brasure, le blocage définitif du dispositif dans un nouvel état dans lequel l'extension du piston 200 sur l'extérieur du corps 100, au niveau de sa seconde extrémité, est supérieure à l'état initial.

L'homme de l'art comprendra aisément qu'un tel pyromécanisme constitue un actionneur linéaire avantageux.

Bien entendu, différentes variantes de réalisation du dispositif ainsi décrit peuvent être envisagées.

En premier lieu, on peut prévoir un laminage du métal à bas point de fusion 300 non point au niveau des interfaces définies entre la bague 150 et le piston 200 mais au niveau d'alésages calibrés formés dans la bague 150 ou dans le piston 200 délimitant la chambre 310.

En second lieu, comme on le décrira plus en détail par la suite, on peut envisager d'assurer la sollicitation en déplacement du piston 200, non point sous l'effet de gaz issus de la composition pyrotechnique 400, mais sous l'effet d'un organe de sollicitation auxiliaire, par exemple un élément ressort.

Le métal à bas point de fusion 300 peut être thermiquement isolé de l'environnement extérieur afin d'éviter tout risque de fusion de ce métal 300 avant mise en oeuvre de la composition pyrotechnique 400.

A cet effet, de préférence, le corps 110 et le bouchon 130 disposés sur l'extérieur de la chambre 310 sont réalisés dans des matériaux présentant des propriétés de conduction thermique médiocre ou thermiquement isolantes, tandis que le piston 200 dont la paroi formant la section intermédiaire 216 est intercalée entre la composition pyrotechnique 400 et le métal à bas point de fusion 300 est réalisée de préférence en un matériau bon conducteur thermique.

Par ailleurs le métal 300 doit être choisi pour présenter une température de fusion ou de ramollissement supérieure à la température ambiante pour assurer sa fusion uniquement en cas de mise en oeuvre de l'initiateur 180.

On va maintenant décrire la variante de réalisation illustrée sur la figure 2.

On retrouve sur cette figure, une structure composée de deux ensembles 100, 200 susceptibles de translation relative selon un axe O-O, un métal à bas point de fusion 300 et une composition pyrotechnique 400.

Au repos, le métal à bas point de fusion 300 assure une immobilisation entre les deux ensembles 100, 200. Lors de la mise en oeuvre de la composition pyrotechnique 400, le métal à bas point de fusion 300 est liquéfié et le gaz développé par la composition pyrotechnique 400 sollicite les ensembles 100, 200 à déplacement relatif. La structure est à nouveau immobilisée après refroidissement du métal 300. Par ailleurs, là encore, selon le mode de réalisation de la figure 2, le métal 300 est situé dans une chambre 310 définie entre, d'une part une bague 150 immobilisée entre un corps 110 et un bouchon 130, et d'autre part un piston 200. Plus précisément encore, la chambre 310 est délimitée par des éléments de la bague 150 et des éléments du piston 200, globalement en L possédant chacun un tronçon axial et un tronçon radial.

Cependant, le dispositif illustré sur la figure 2 présente par rapport à la figure 1 un certain nombre de points caractéristiques, parmi lesquels on peut citer les suivants.

Selon la figure 2, le piston 200 est formé d'une structure annulaire qui n'assure pas directement l'effet actionneur de sortie, mais contrôle l'élément de sortie.

Plus précisément, cet élément de sortie est formé d'une structure 230 pouvant être formée par exemple d'un écrou, d'un système de pince constitué de différents segments, par exemple filetés équi-répartis autour de l'axe O-O, ou encore tout moyen équivalent. Cet élément formant actionneur de sortie 230 est emprisonné en position de repos initial entre deux troncs de cône 219, 139 formés respectivement sur le piston 200 et sur le bouchon 130.

Par ailleurs, le piston 200 est formé de deux pièces 202, 204 assemblées par filetage avec un joint 206 intercalé.

Un joint torique 170 est placé dans une gorge 203 de la pièce 202 pour assurer l'étanchéité entre le piston 200 et le corps 110, de façon comparable à la figure 1.

Un joint additionnel 172 placé dans une gorge 137 du bouchon 130 assure l'étanchéité entre ce dernier et le piston 200.

L'initiateur 180 est placé dans un passage radial en regard de l'axe O-O traversant la paroi du corps 110. L'initiateur 180 débouche ainsi dans une chambre annulaire 140 contenant la composition pyrotechnique 400. Cette chambre 140 est délimitée radialement sur l'extérieur par la paroi interne du corps 110, axialement côté seconde extrémité du système par une surface transversale du piston 200 et axialement sur la première extrémité et radialement sur l'intérieur par la bague 150.

On notera par ailleurs qu'au niveau de la seconde extrémité, le corps 110 présente un flasque 1102 dirigé radialement vers l'intérieur et comportant un fourreau 1104 pourvu d'un taraudage 1106 interne. Un tel taraudage 1106 peut recevoir tout élément fileté complémentaire devant être maintenu provisoirement par rapport à un élément associé maintenu quant à lui par le taraudage 232 de l'élément central 230 formé d'un écrou ou d'une pince.

Le dispositif illustré sur la figure 2 peut trouver application dans le relâchement contrôlé, lors de la mise en oeuvre de l'initiateur 180, d'un assemblage réalisé par des éléments filetés en prise respectivement avec les taraudages 1106 et 232.

Là encore, l'initiation de la charge pyrotechnique 400 fortement exothermique, par l'initiateur électrique 180, permet la fusion du métal 300 à bas point de fusion, formant initialement une brasure entre la bague 150 et le piston 200, pour libérer le mouvement. Les gaz issus de la combustion et de la composition pyrotechnique 400 poussent le piston 200 vers la seconde extrémité de la structure. Le métal liquide 400 est alors laminé dans le jeu des ajustements formés entre le piston 200 et la bague 150, pour former une fonction amortisseur contrôlant la dynamique du piston.

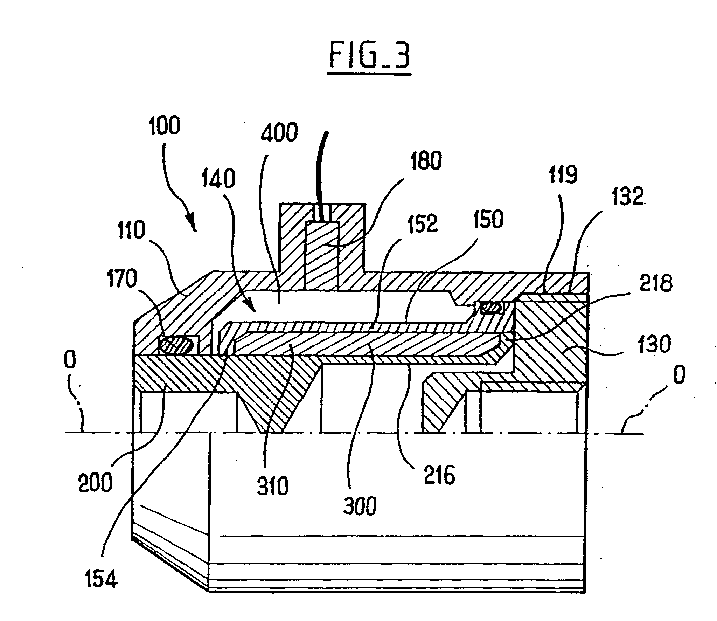

On va maintenant décrire la variante de réalisation illustrée sur la figure 3 annexée.

On retrouve dans cette variante une structure comprenant deux ensembles 100, 200 susceptibles de déplacement relatif, mais immobilisés initialement par un métal à bas point de fusion 300 formant brasure, entre une bague 150 liée au premier ensemble et le second ensemble 200 formant piston, ainsi qu'une composition pyrotechnique fortement exothermique 400 associée à un initiateur électrique 180.

Par ailleurs, là encore, le premier ensemble 100 est formé par assemblage d'un corps 110 et d'un bouchon 130.

L'initiateur pyrotechnique 180 est placé dans un canal radial traversant la paroi du corps externe 110 et débouche dans une chambre annulaire 140 délimitée par le corps 110, la bague 150, et dans sa portion radialement interne par la périphérie externe du piston 200.

La bague 150 est également liée au premier ensemble 100. Elle possède pour cela une portion pincée entre un épaulement du corps 110 et le bouchon 130.

La chambre annulaire 310 qui contient le métal à bas point de fusion 300 formant brasure, située radialement sur l'intérieur de la chambre 140 et contenant la composition pyrotechnique 400 est délimitée par deux paires de parois en L appartenant respectivement à la bague 150 et au piston 200, chacune de ces deux paires de parois possédant une paroi 154, 218 d'orientation radiale transversale à l'axe O-O et une paroi 152, 216 d'orientation axiale parallèle à l'axe O-O.

Selon la figure 3, la chambre 140 contenant la composition pyrotechnique 400 n'étant délimitée que radialement sur l'intérieur par le piston 200, l'on comprend que les gaz éventuellement générés par la composition pyrotechnique 400 ne peuvent solliciter la structure en déplacement.

Dans ce contexte, selon la figure 3, le piston 200 est sollicité à déplacement vers la seconde extrémité de la structure, après fusion de la brasure 300 par un élément de sollicitation auxiliaire, par exemple un ressort. En variante, le piston 200 peut être sollicité par un élément extérieur à la structure illustrée sur la figure 3, par exemple une sangle sollicitant le piston 200 à la traction vers l'extérieur du corps 110.

Comme on l'a évoqué précédemment, le mode de réalisation illustré sur la figure 3 permet entre autres de provoquer un relâchement entre les pièces tendues tel que des sangles, câbles, etc ...

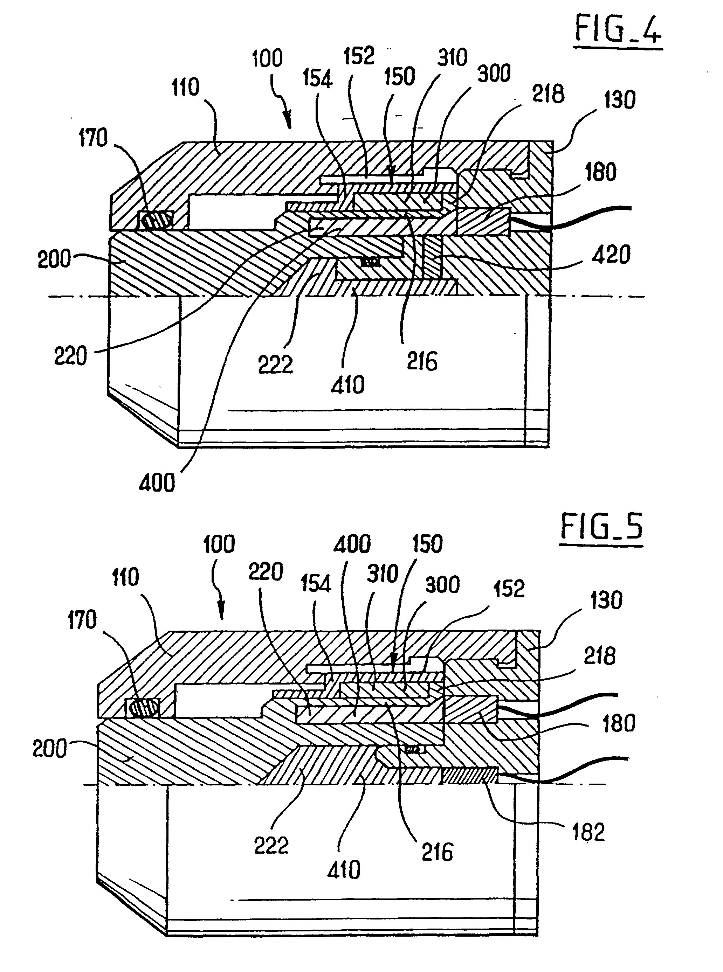

On va maintenant décrire la variante de réalisation illustrée sur la figure 4.

Celle-ci reprend les dispositions générales illustrées sur la figure 1 et précédemment décrites. Elle se distingue cependant du mode de réalisation précédemment décrit en regard de la figure 1 par le fait que selon la figure 4, la structure comprend deux compositions pyrotechniques 400, 410 reliées entre elles par un relais pyrotechnique 420.

La première composition pyrotechnique 400 communique avec l'initiateur électrique 180. Elle est placée dans une chambre annulaire 220 formée dans le piston 200 à proximité du métal 300, plus précisément radialement sur l'intérieur de la chambre 310 délimitée par la bague 150 et la périphérie externe du piston 200.

Cette première composition pyrotechnique 400 est fortement exothermique mais peut le cas échéant générer peu de gaz. Elle a pour fonction de faire fondre le métal 300 adjacent.

La seconde composition pyrotechnique 410 est placée dans une chambre borgne 222 ménagée en position centrale dans le piston 200 et débouchant sur la première extrémité de la structure côté bouchon obturateur 130. Le retard pyrotechnique 420 est placé dans un passage radial reliant les deux chambres 220, 222. Ainsi la seconde composition pyrotechnique 410 est mise en oeuvre après la première composition pyrotechnique 400, selon un retard défini par la combustion du retard pyrotechnique 420. La seconde composition pyrotechnique 410 est conçue pour générer un volume de gaz suffisant pour déplacer le piston 200 comme décrit précédemment en regard de la figure 1.

L'utilisation de deux compositions pyrotechniques 400, 410 destinées à assurer respectivement la fusion du métal 300 et le déplacement du piston 200 permet un contrôle séquentiel précis des fonctionnements de la structure.

On va maintenant décrire la variante de réalisation illustrée sur la figure 5.

Cette variante reprend également les concepts généraux illustrés sur la figure 1 et décrits précédemment. Par ailleurs, la variante de réalisation illustrée sur la figure 5 comprend également deux compositions pyrotechniques 400, 410 destinées à assurer respectivement la fusion du métal 300 et la génération de gaz propre à déplacer le piston 200. Cependant, contrairement à la figure 4, les deux compositions pyrotechniques 400, 410 ne sont pas reliées par un retard pyrotechnique. Elles sont au contraire associées à des initiateurs, par exemple électriques, respectifs, 180, 182 portés par le bouchon 130. Dans ce cas, le séquencement n'est pas contrôlé par effet pyrotechnique dû à un retard comme décrit pour la figure 4, mais par l'application de signaux appropriés sur les initiateurs respectifs 180, 182.

Par ailleurs, selon la figure 5, de façon comparable à la figure 4, la première composition pyrotechnique 180 fortement exothermique est située en position adjacente au métal 300, dans une chambre annulaire du piston 200, tandis que la seconde composition pyrotechnique 410, génératrice de gaz, est située dans une chambre centrale borgne 222 du piston 200.

Bien entendu la présente invention n'est pas limitée aux modes de réalisation particuliers qui viennent d'être décrits.

En particulier alors que selon les modes de réalisation précédemment décrits, le dispositif conforme à la présente invention constitue essentiellement un actionnement à déplacement linéaire selon l'axe O-O du dispositif en variante, on peut prévoir que celui-ci génère des efforts transversaux à l'axe O-O, par exemple de pince par resserrement de segments d'orientation générale axiale équi-répartis autour de l'axe O-O, grâce à des moyens, en coin ou en cône liés au piston 200 déplacé.

A titre d'exemple non limitatif le métal 300 à bas point de fusion peut être formé de :
- Bi50/Pb28/Sn22 (pour une température de fusion de l'ordre de 95-110°C) ou
- In (pour une température de fusion de l'ordre de 156°C) ou
- Sn ou Sn85/Zn15 (pour une température de fusion de l'ordre de 200-250°C) ou
- Pb82,5/Cd17,5 ou
- Pb96/Sb4 (pour une température de fusion de l'ordre de 250-300°C),
tandis que la composition pyrotechnique 400 peut être formée de :
- Al + Fe₂O₃ ou
- Mg + Fe₂O₃ ou
- Al + CuO ou
- Mg + CuO.

Par ailleurs dans le cadre de la présente invention :
- le métal 300 à bas point de fusion peut être remplacé par tout matériau approprié, par exemple paraffine, alliages eutectiques, etc...

## Revendications

1. Dispositif formant mécanisme, notamment pour application dans le domaine spatial, comprenant en combinaison :
- un matériau (300) à bas point de fusion,
- au moins un moyen de chauffage (400), et
- un moyen apte à imposer un laminage du matériau à bas point de fusion (300) à l'état liquide, après mise en oeuvre du moyen de chauffage (400), pour permettre de générer une fonction amortisseur de choc,
**caractérisé par le fait que** le moyen de chauffage (400) comprend au moins une composition pyrotechnique fortement exothermique.

2. Dispositif selon la revendication 1, **caractérisé par le fait que** le matériau (300) à bas point de fusion est adapté pour réaliser une brasure et qu'il comprend en outre une structure présentant une architecture possédant une zone bloquée par le matériau à bas point de fusion (300), pouvant être libérée par liquéfaction du matériau à bas point de fusion lors de la mise en oeuvre du moyen de chauffage.

3. Dispositif selon l'une des revendications 1 ou 2, **caractérisé par le fait qu'**il comprend au moins deux surfaces concentriques (154, 216 ; 152, 218) prévues respectivement sur des pièces susceptibles de déplacement (150, 200) pour assurer le laminage du matériau à bas point de fusion (300).

4. Dispositif selon rune des revendication 1 ou 2, **caractérisé par le fait qu'**il comprend au moins un alésage calibré débouchant dans la chambre contenant le matériau à bas point de fusion (300) pour assurer le laminage.

5. Dispositif selon l'une des revendications 1 à 4, **caractérisé par le fait que** la composition pyrotechnique (400, 410) est conçue pour générer un volume de gaz suffisant pour assurer le déplacement relatif de deux pièces (100, 200) du dispositif.

6. Dispositif selon l'une des revendications 1 à 5, **caractérisé par le fait qu'**il comprend un élément externe, tel qu'un organe élastique ou un élément travaillant à la traction apte à assurer un déplacement relatif entre deux pièces (100, 200) du dispositif après mise en oeuvre du moyen de chauffage (400).

7. Dispositif selon l'une des revendications 1 à 6, **caractérisé par le fait que** le matériau à bas point de fusion (300) est situé dans une chambre (310) conçue pour être réduite en volume lors de la mise en oeuvre du moyen de chauffage (400).

8. Dispositif selon l'une des revendications 1 à 7, **caractérisé par le fait que** la chambre (310) logeant le matériau à bas point de fusion (300) est délimitée par deux structures en L possédant chacune une paroi (152, 216) d'orientation axiale et une paroi (154, 218) d'orientation radiale solidaires respectivement de deux ensembles (100, 200) susceptibles de déplacement relatif.

9. Dispositif selon la revendication 8, **caractérisé par le fait que** la chambre (310) logeant le matériau à bas point de fusion (300) est délimitée au moins partiellement par une bague (150) solidaire d'un corps fixe (110).

10. Dispositif selon la revendication 9, **caractérisé par le fait que** la bague (150) est pincée entre un corps externe d'enveloppe (110) et un bouchon obturateur (130).

11. Dispositif selon l'une des revendications 1 à 10, **caractérisé par le fait que** la chambre (310) logeant le matériau (300) à bas point de fusion est thermiquement isolée de l'environnement externe.

12. Dispositif selon l'une des revendications 1 à 11, **caractérisé par le fait qu'**il comprend un corps d'enveloppe externe (110) thermiquement isolant.

13. Dispositif selon l'une des revendications 1 à 12, **caractérisé par le fait qu'**il comprend un piston (200) susceptible d'être déplacé vers l'extérieur d'un corps d'enveloppe, après mise en oeuvre du moyen de chauffage (400) pour former actionneur linéaire.

14. Dispositif selon l'une des revendications 1 à 13, **caractérisé par le fait qu'**il comprend deux pièces (100, 230) susceptibles de déplacement relatif pour assurer le relâchement d'un assemblage, lors de la mise en oeuvre du moyen de chauffage.

15. Dispositif selon l'une des revendications 1 à 14, **caractérisé par le fait qu'**il comprend un écrou (230) susceptible d'être relâché lors de la mise en oeuvre du moyen de chauffage.

16. Dispositif selon l'une des revendications 1 à 15, **caractérisé par le fait qu'**il comprend un écrou (230) formé de différents segments équi-répartis autour d'un axe et susceptibles d'être relâchés lors de la mise en oeuvre du moyen de chauffage.

17. Dispositif selon l'une des revendications 1 à 16, **caractérisé par le fait qu'**il comprend une structure de pince constituée de différents segments (194) d'orientation générale axiale équi-répartis autour d'un axe O-O et susceptibles de resserrement lors du déplacement d'un piston (200) comprenant une surface d'actionnement en forme de tronc de cône, après mise en oeuvre du moyen de chauffage (400).

18. Dispositif selon l'une des revendications 1 à 17, **caractérisé par le fait qu'**il comprend un initiateur (180) associé au moyen de chauffage (400).

19. Dispositif selon l'une des revendications 1 à 18, **caractérisé par le fait que** le moyen de chauffage comprend deux compositions pyrotechniques (400, 410), respectivement fortement exothermiques et génératrices de gaz, pour assurer respectivement la fusion du matériau à bas point de fusion (300) et le déplacement de la structure.

20. Dispositif selon la revendication 19, **caractérisé par le fait que** les deux compositions pyrotechniques (400, 410) communiquent par l'intermédiaire d'un retard pyrotechnique (420).

21. Dispositif selon la revendication 19, **caractérisé par le fait que** les deux compositions pyrotechniques (400, 410) sont actionnées par des initiateurs respectifs (180, 182).

22. Dispositif selon l'une des revendications 1 à 21, **caractérisé par le fait que** le mécanisme constitue un pyromécanisme.

23. Dispositif selon l'une des revendications 1 à 22, **caractérisé par le fait que** le matériau à bas point de fusion est un métal (300).

24. Dispositif selon l'une des revendications 1 à 23, **caractérisé par le fait que** le matériau à bas point de fusion (300) est choisi dans le groupe comprenant la paraffine et des alliages eutectiques.

## Claims

1. A mechanism-forming device, in particular for application in space, the device comprising in combination:
- a low melting point material (300);
- at least one heater means (400); and
- means suitable for throttling the low melting point material (300) in the liquid state, after the heater means (400) have operated, thereby performing a shock-absorbing function, the device being **characterized by** the fact that the heater means (400) comprise at least one highly exothermal pyrotechnical composition.

2. A device according to claim 1, characterized that the fact that the low melting point metal (300) is adapted to perform soldering, and by the fact that the device further comprises a structure presenting architecture that possesses a zone that is blocked by the low melting point metal (300) and that is capable of being released by the low melting point material liquefying when the heater means are operated.

3. A device according to claim 1 or claim 2, **characterized by** the fact that it comprises at least two concentric surfaces (154, 216; 152, 218) provided respectively on parts (150, 200) that are capable of moving in order to throttle the low melting point material (300).

4. A device according to claim 1 or claim 2, **characterized by** the fact that it has at least one calibrated bore opening out into the chamber containing the low melting point material (300) for throttling purposes.

5. A device according to any one of claims 1 to 4, **characterized by** the fact that the pyrotechnical composition (400, 410) is designed to generate a volume of gas that is sufficient to drive relative displacement of the two parts (100, 200) of the device.

6. A device according to any one of claims 1 to 5, **characterized by** the fact that it has an external element, such as a resilient member of an element working in traction, suitable for driving relative displacement between the two parts (100, 200) of the device after the heater means (400) have been operated.

7. A device according to any one of claims 1 to 6, **characterized by** the fact that the low melting point material (300) is situated in a chamber (310) designed to be reduced in volume during operation of the heater means (400).

8. A device according to any one of claims 1 to 7, **characterized by** the fact that the chamber (310) housing the melting point material (300) is defined by two L-shaped structures, each possessing both an axially-extending wall (152,216) and a radially-extending wall (254, 218) secured respectively to two assemblies (100, 200) capable of relative movement.

9. A device according to claim 8, **characterized by** the fact that the chamber (310) housing the melting point material (300) is defined at least in part by a ring (150) secured to a fixed body (110).

10. A device according to claim 9, **characterized by** the fact that the ring (150) is clamped between an outer shell body (110) and a closure plug (130).

11. A device according to any one of claims 1 to 10, **characterized by** the fact that the chamber (310) housing the melting point material (300) is thermally insulated from the external environment.

12. A device according to any one of claims 1 to 11, **characterized by** the fact that it comprises an outer shell body (110) that is thermally insulating.

13. A device according to any one of claims 1 to 12, **characterized by** the fact that it includes a piston (200) suitable for being moved out from a shell body after the heater means (200) have been operated, thereby forming a linear actuator.

14. A device according to any one of claims 1 to 13, **characterized by** the fact that it has two parts (100, 230) capable of relative movement for releasing an assembly when the heater means are operated.

15. A device according to any one of claims 1 to 14, **characterized by** the fact that it includes a nut (230) suitable for being released when the heater means are operated.

16. A device according to any one of claims 1 to 15, **characterized by** the fact that it has a nut (230) made up of a plurality of segments uniformly distributed around an axis and suitable for being released when the heater means are operated.

17. A device according to any one of claims 1 to 16, **characterized by** the fact that it includes a clamp structure constituted by a plurality of general axially extending segments (194) uniformly distributed around an axis O-O and suitable for moving towards one another during displacement of a piston (200) having an actuator surface in the form of a truncated cone, after the heater means (400) have been operated.

18. A device according to any one of claims 1 to 17, **characterized by** the fact that it includes an initiator (180) associated with the heater means (400).

19. A device according to any one of claims 1 to 18, **characterized by** the fact that the heater means comprises two pyrotechnical compositions (400, 410), respectively one composition that is highly exothermal and another composition that generates gas, thereby respectively melting the low melting point material (300) and driving the structure.

20. A device according to claim 19, **characterized by** the fact that the two pyrotechnical compositions (400, 410) communicate via a pyrotechnical delay (420).

21. A device according to claim 19, **characterized by** the fact that the two pyrotechnical compositions (400, 410) are actuated by respective initiators (180, 182).

22. A device according to any one of claims 1 to 21, **characterized by** the fact that the mechanism constitutes a pyromechanism.

23. A device according to any one of claims 1 to 22, **characterized by** the fact that the low melting point material is a metal (300).

24. A device according to any one of claims 1 to 23, **characterized by** the fact that the low melting point material (300) is selected from the group comprising paraffin and eutectic alloys.

## Patentansprüche

1. Eine einen Mechanismus bildende Vorrichtung, besonders zur Anwendung im Raumfahrtbereich, umfassend in Kombination:
- ein Material (300) mit niedrigem Schmelzpunkt,
- mindestens ein Heizmittel (400), und
- ein Mittel, das dazu geeignet ist, eine Drosselung des Materials mit niedrigem Schmelzpunkt (300) in flüssigem Zustand nach dem Einsatz des Heizmittels (400) vorzunehmen, um die Erzeugung einer Stoßdämpferfunktion zu gestatten, **dadurch gekennzeichnet, daß** das Heizmittel (400) mindestens eine stark exotherme, pyrotechnische Verbindung aufweist.

2. Vorrichtung nach Anspruch 1, **dadurch gekennzeichnet, daß** das Material (300) mit niedrigem Schmelzpunkt dazu geeignet ist, eine Lötstelle zu realisieren, und daß sie außerdem einen Aufbau aufweist, der eine Architektur darbietet, die eine Zone besitzt, die durch das Material mit niedrigem Schmelzpunkt (300) blockiert wird, aber durch Verflüssigung des Materials mit niedrigem Schmelzpunkt während des Einsatzes des Heizmittels freigesetzt wird.

3. Vorrichtung nach einem der Ansprüche 1 oder 2, **dadurch gekennzeichnet, daß** sie mindestens zwei konzentrische Oberflächen (154, 216; 152, 218) aufweist, die respektive auf den Teilen (150, 200) vorgesehen sind, die zur Verlagerung imstande sind, um die Drosselung des Materials mit niedrigem Schmelzpunkt (300) sicherzustellen.

4. Vorrichtung nach einem der Ansprüche 1 oder 2, **dadurch gekennzeichnet, daß** sie mindestens eine kalibrierte Bohrung aufweist, die in die Kammer einmündet, die das Material mit niedrigem Schmelzpunkt (300) enthält, um die Drosselung sicherzustellen.

5. Vorrichtung nach einem der Ansprüche 1 bis 4, **dadurch gekennzeichnet, daß** die pyrotechnische Verbindung (400, 410) so konzipiert ist, daß sie ein Gasvolumen erzeugt, das ausreicht, um die relative Verlagerung der beiden Teile (100, 200) der Vorrichtung sicherzustellen.

6. Vorrichtung nach einem der Ansprüche 1 bis 5, **dadurch gekennzeichnet, daß** sie ein äußeres Element, wie ein elastisches Organ oder ein auf Zug arbeitendes Element aufweist, das dazu geeignet ist, eine relative Verlagerung zwischen den beiden Teilen (100, 200) der Vorrichtung nach dem Einsatz des Heizmittels (400) sicherzustellen.

7. Vorrichtung nach einem der Ansprüche 1 bis 6, **dadurch gekennzeichnet, daß** das Material mit niedrigem Schmelzpunkt (300) in einer Kammer (310) sitzt, die dazu konzipiert ist, während des Einsatzes des Heizmittels (400) im Volumen verringert zu werden.

8. Vorrichtung nach einem der Ansprüche 1 bis 7, **dadurch gekennzeichnet, daß** die Kammer (310), die das Material mit niedrigem Schmelzpunkt (300) aufnimmt, durch zwei L-förmige Aufbauten begrenzt ist, die jeweils eine Wand (152, 216) mit axialer Ausrichtung und eine Wand (154, 218) mit radialer Ausrichtung besitzen, die respektive mit zwei Anordnungen (100, 200) fest verbunden sind, die zur relativen Verlagerung imstande sind.

9. Vorrichtung nach Anspruch 8, **dadurch gekennzeichnet, daß** die Kammer (310), die das Material mit niedrigem Schmelzpunkt (300) aufnimmt, mindestens teilweise durch einen Ring (150) begrenzt ist, der fest mit einem festen Körper (110) verbunden ist.

10. Vorrichtung nach Anspruch 9, **dadurch gekennzeichnet, daß** der Ring (150) zwischen einem äußeren Umhüllungskörper (110) und einem Verschlußdeckel (130) eingeklemmt ist.

11. Vorrichtung nach einem der Ansprüche 1 bis 10, **dadurch gekennzeichnet, daß** die Kammer (310), die das Material (300) mit niedrigem Schmelzpunkt aufnimmt, gegenüber der Außenumgebung wärmeisoliert ist.

12. Vorrichtung nach einem der Ansprüche 1 bis 11, **dadurch gekennzeichnet, daß** sie einen wärmeisolierenden, äußeren Umhüllungskörper (110) aufweist.

13. Vorrichtung nach einem der Ansprüche 1 bis 12, **dadurch gekennzeichnet, daß** sie einen Kolben (200) aufweist, der in der Lage ist, nach dem Einsatz des Heizmittels (400) zum Äußeren eines Umhüllungskörpers hin versetzt zu werden, um einen Linearantrieb zu bilden.

14. Vorrichtung nach einem der Ansprüche 1 bis 13, **dadurch gekennzeichnet, daß** sie zwei Teile (100, 230) aufweist, die zur relativen Verlagerung imstande sind, um während des Einsatzes des Heizmittels die Freigabe einer Anordnung sicherzustellen.

15. Vorrichtung nach einem der Ansprüche 1 bis 14, **dadurch gekennzeichnet, daß** sie eine Mutter (230) aufweist, die in der Lage ist, während des Einsatzes des Heizmittels freigesetzt zu werden.

16. Vorrichtung nach einem der Ansprüche 1 bis 15, **dadurch gekennzeichnet, daß** sie eine Mutter (230) aufweist, die aus verschiedenen Segmenten gebildet ist, die um eine Achse gleich verteilt sind und in der Lage sind, während des Einsatzes des Heizmittels freigesetzt zu werden.

17. Vorrichtung nach einem der Ansprüche 1 bis 16, **dadurch gekennzeichnet, daß** sie eine Zangenstruktur aufweist, die von verschiedenen Segmenten (194) mit insgesamt axialer Ausrichtung gebildet ist, die um eine Achse O-O gleich verteilt sind, und die nach dem Einsatz des Heizmittels (400) während der Verlagerung eines Kolbens (200), der eine kegelstumpfförmige Betätigungsfläche aufweist, zum erneuten Festklemmen in der Lage sind.

18. Vorrichtung nach einem der Ansprüche 1 bis 17, **dadurch gekennzeichnet, daß** sie einen Auslöser (180) aufweist, der dem Heizmittel (400) zugeordnet ist.

19. Vorrichtung nach einem der Ansprüche 1 bis 18, **dadurch gekennzeichnet, daß** das Heizmittel zwei pyrotechnische Verbindungen (400, 410) aufweist, die stark exotherm bzw. gaserzeugend sind, um das Schmelzen des Materials mit niedrigem Schmelzpunkt (300) bzw. die Verlagerung des Aufbaus sicherzustellen.

20. Vorrichtung nach Anspruch 19, **dadurch gekennzeichnet, daß** die beiden pyrotechnischen Verbindungen (400, 410) mittels einer pyrotechnischen Verzögerung (420) miteinander kommunizieren.

21. Vorrichtung nach Anspruch 19, **dadurch gekennzeichnet, daß** die beiden pyrotechnischen Verbindungen (400, 410) durch jeweilige Auslöser (180, 182) betätigt werden.

22. Vorrichtung nach einem der Ansprüche 1 bis 21, **dadurch gekennzeichnet, daß** der Mechanismus einen Pyromechanismus bildet.

23. Vorrichtung nach einem der Ansprüche 1 bis 22, **dadurch gekennzeichnet, daß** das Material mit niedrigem Schmelzpunkt ein Metall (300) ist.

24. Vorrichtung nach einem der Ansprüche 1 bis 23, **dadurch gekennzeichnet, daß** das Material mit niedrigem Schmelzpunkt (300) aus der Gruppe ausgewählt ist, die das Paraffin und eutektische Legierungen umfaßt.
